# FASCICULE DE BREVET EUROPEEN

(11) **EP 3 193 107 B1**
(45) Date de publication et mention de la délivrance du brevet: **12.06.2019**
(21) Numéro de dépôt: 16204269.1
(22) Date de dépôt: 15.12.2016
(51) Int. Cl.: F25D 3/10, F25D 25/00

(54) **RÉSERVOIR DE STOCKAGE DE PRODUITS À DES TEMPÉRATURES CRYOGÉNIQUES**
LAGERBEHÄLTER FÜR PRODUKTE BEI KRYOGENEN TEMPERATUREN
VESSEL FOR STORING PRODUCTS AT CRYOGENIC TEMPERATURES

(30) Priorité: 18.01.2016 FR 1650367
(43) Date de publication de la demande: 19.07.2017
(73) Titulaire: CRYOPAL, 77607 Bussy Saint-Georges (FR)
(72) Inventeur: GADREY, Sébastien, 58230 GOULOUX (FR); LEGERON, Wilfried, 94340 JOINVILLE LE PONT (FR); BAHILLO, Romain, 77607 MARNE LA VALLEE CEDEX (FR)
(74) Mandataire: De Cuenca, Emmanuel Jaime

(56) Documents cités:
- CN-A- 104 528 213
- US-A- 5 620 110
- US-A- 5 896 645

## Description

L'invention concerne un réservoir de stockage de produits à des températures cryogéniques.

L'invention concerne plus particulièrement un réservoir de stockage de produits à des températures cryogéniques comprenant une cuve isolée sous vide et délimitant un volume de stockage ayant une extrémité supérieure ouverte, le réservoir comprenant un couvercle mobile pour la fermeture et l'ouverture du volume de stockage.

L'invention concerne en particulier les réservoirs de stockage de produits (par exemples des produits cryo-biologiques). Ces réservoirs isolés sous vide contiennent généralement un volume de gaz (azote ou autre) sous forme liquide et/ou gazeuse pour maintenir les produits à des températures basses déterminées (généralement de -200°C à -80°C selon les applications). On pourra se référer par exemple aux documents WO98/58215A, WO96/26402A, US5620110A ou US5896645.

De nombreux dispositifs ou récipients cryogénique existent, notamment pour la conservation d'échantillons biologiques. Ces dispositifs comprennent un couvercle d'accès au volume de stockage (via par exemple une trappe aménagée). Les échantillons sont introduits dans la cuve par exemple au moyen d'un dispositif de stockage (rack(s), boîte(s),...). Le terme de « rack » que l'on emploie ici vise à désigner toutes les mises en forme équivalentes possibles du dispositif de stockage.

Les opérateurs se chargent de mettre en place, de prélever, d'utiliser, etc., les racks contentant les échantillons à conserver. Ces manipulations autrefois rares deviennent de plus en plus fréquentes et répétitives. Ceci entraîne un surcroit de travail manuel et de gestion de la traçabilité.

Un but de la présente invention est de pallier tout ou partie des inconvénients de l'art antérieur relevés ci-dessus.

Le document CN104528213A décrit un réservoir conforme au préambule de la revendication 1.

Le réservoir comprend un organe d'actionnement commandé relié mécaniquement au couvercle pour déplacer le couvercle, l'organe d'actionnement étant mobile entre une première position disposant le couvercle dans sa position de fermeture du volume de stockage de la cuve et une seconde position disposant le couvercle dans une position d'ouverture du volume de stockage de la cuve.

Le réservoir comporte un système de capteur(s) de mesure de la position de l'organe d'actionnement, en particulier au moins un capteur de détection configuré pour détecter lorsque l'organe d'actionnement atteint sa première position et/ou sa seconde position. De plus, le réservoir comprend un panier support disposé dans le volume de stockage de la cuve, le panier support comprenant un corps rigide délimitant une pluralité de casiers destinés à accueillir des éléments tels que des racks de stockage de produits, les casiers étant délimités par des parois latérales et étant ouverts au niveau d'une extrémité supérieure qui coïncide avec l'extrémité ouverte du volume de stockage de la cuve.

Le réservoir permet d'automatiser et de sécuriser au moins une partie du processus de manipulation d'échantillons cryogéniques. Le réservoir permet notamment une automatisation de l'ouverture/fermeture du réservoir, de façon rapide, ne nuisant pas aux cycles de manipulations des échantillons. Ceci est particulièrement avantageux lorsque le réservoir est intégré à une salle contenant plusieurs réservoirs de ce type.

Cette automatisation des ouvertures/fermetures permet de réaliser ces opérations en temps masqué, c'est-à-dire avantageusement pendant des manipulations sur d'autres récipients.

De plus, le réservoir permet de réaliser une ouverture de manière préventive c'est-à-dire avant un temps d'utilisation donné.

Le cas échéant, les opérations d'ouverture/fermeture peuvent être commandées à distance (sans fil ou par voie filaire).

Indépendamment de la présence d'un organe d'actionnement commandé pour réaliser des ouvertures/fermetures automatiques, l'invention peut concerner un réservoir de stockage de produits à des températures cryogéniques comprenant une cuve isolée sous vide délimitant un volume de stockage ayant une extrémité supérieure ouverte, le réservoir comprenant un couvercle mobile pour la fermeture et l'ouverture du volume de stockage dans lequel le réservoir comprend un panier support disposé dans le volume de stockage de la cuve, le panier support comprenant un corps rigide délimitant une pluralité de casiers destinés à accueillir des éléments tels que des racks de stockage de produits, les casiers étant délimités par des parois latérales et étant ouvert au niveau d'une de leur extrémité supérieure qui coïncide avec l'extrémité ouverte du volume de stockage.

Par ailleurs, des modes de réalisation de l'invention peuvent comporter l'une ou plusieurs des caractéristiques suivantes:
- l'organe d'actionnement comprend une première extrémité reliée à la cuve et une seconde extrémité reliée au couvercle,
- l'organe d'actionnement comprend au moins l'un parmi : un mécanisme télescopique, un mécanisme à engrenage, un vérin,
- l'organe d'actionnement comprenant un élément moteur à entraînement hydraulique et/ou pneumatique et/ou électrique,
- le panier support est fixé à l'intérieur de la cuve via des organes de fixation notamment au moins un système à vis et écrou,
- l'extrémité supérieure du panier support comprend au moins un organe de fixation destiné à coopérer avec un dispositif de positionnement ou de guidage des éléments destiné à être stockés dans le ou les casiers,
- l'extrémité inférieure du panier support est au moins partiellement close et est située au-dessus du fond du volume de stockage de la cuve,
- le panier support est constitué d'un matériau ayant une conductivité thermique comprise entre 200 W/m.K et 400 W/m.K,
- le panier support est constitué d'aluminium.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en perspective, schématique et partielle, illustrant un exemple de réservoir cryogénique selon un exemple de réalisation de l'invention avec son couvercle en position ouverte,
- la figure 2 représente une vue similaire à celle de la figure 1 dans laquelle le couvercle est en position fermée,
- la figure 3 représente une vue en perspective de dessus, schématique et partielle, illustrant un panier utilisé dans un réservoir cryogénique,
- la figure 4 représente une vue de côté, schématique et partielle, illustrant l'intégration d'un panier support conforme à la figure 3 dans un réservoir,
- la figure 5 représente une vue de côté et en perspective, schématique et partielle, illustrant un exemple de rack support d'échantillon pouvant être stocké dans un tel réservoir.

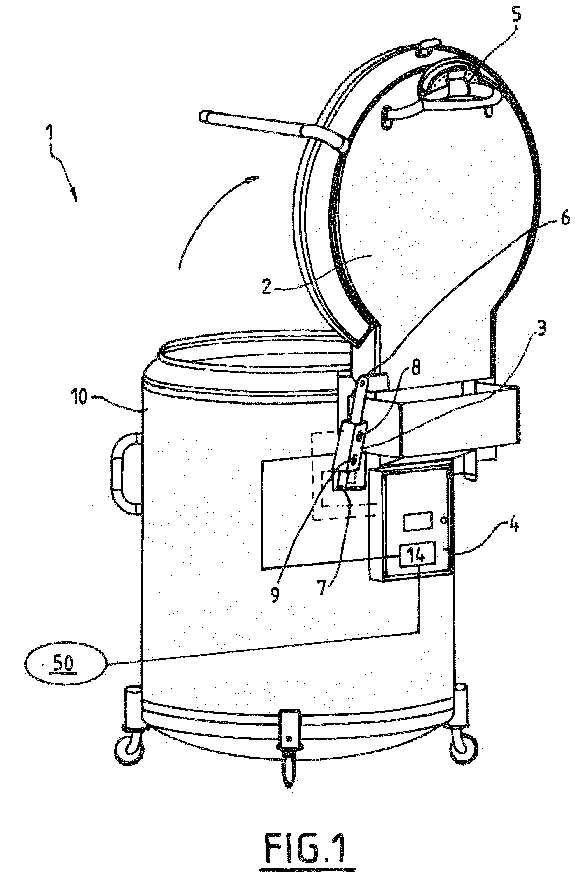

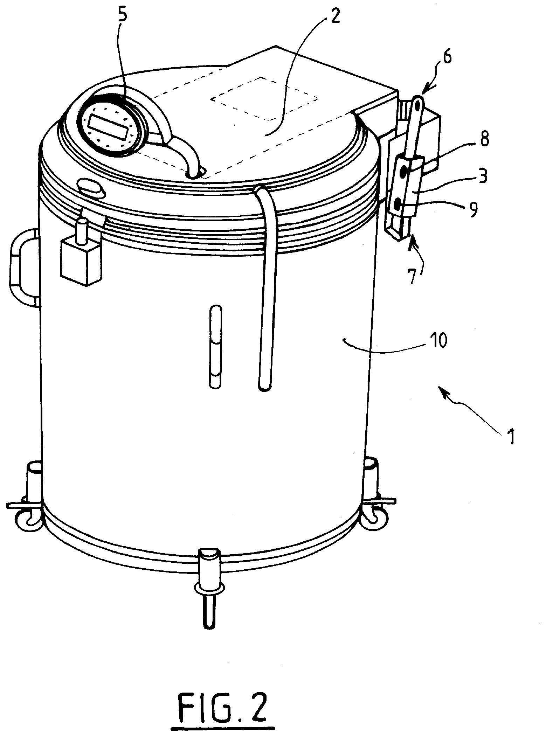

Le réservoir 1 de stockage de produits à des températures cryogéniques représenté aux figures 1 et 2 comprend classiquement une cuve 10 à double parois isolée sous vide et délimitant un volume de stockage ayant une extrémité supérieure ouverte. Le réservoir 1 comprend un couvercle 2 mobile pour la fermeture et l'ouverture du volume de stockage.

Dans cet exemple de réalisation, le couvercle 2 est mobile en rotation. Le couvercle 2 est par exemple mobile en rotation au niveau d'une de ses extrémités autour d'un axe de rotation situé par exemple dans un plan parallèle au plan de l'ouverture supérieure de la cuve 10. Par exemple, le couvercle 2 est monté pivotant sur un axe rendu solidaire d'une paroi extérieure de la cuve 10 (à proximité de l'extrémité supérieure de la cuve 10).

Bien entendu, en variante, le couvercle 2 peut être mobile en translation ou selon une combinaison de rotation(s) et de translation(s).

Selon une particularité avantageuse, le réservoir 1 comprend un organe 3 d'actionnement commandé relié mécaniquement au couvercle 2 pour déplacer le couvercle 2. L'organe 3 d'actionnement est mobile entre une première position disposant le couvercle 2 dans sa position de fermeture du volume de stockage de la cuve 10 (figure 2) et une seconde position disposant le couvercle dans une position d'ouverture du volume de stockage de la cuve 10 (figure 1).

L'organe 3 d'actionnement comprend par exemple une première extrémité 7 reliée rigidement à la cuve 10 et une seconde extrémité 6 reliée rigidement au couvercle 2

L'organe 3 d'actionnement comprend par exemple au moins l'un parmi : un mécanisme télescopique, un mécanisme à engrenage, un vérin. L'organe 3 d'actionnement comprenant un élément moteur à entraînement hydraulique et/ou pneumatique et/ou électrique pour le déplacement entre les deux positions. Le moteur réalise par exemple l'entrainement rotatif et/ou linéaire permettant le mouvement relatif desdites extrémités. Cette structure permet ainsi de rapprocher/écarter lesdites extrémités pour réaliser la fermeture/l'ouverture automatique du couvercle 2.

L'organe 3 d'actionnement peut être contrôlé par une interface homme machine 5 électronique qui peut être la même que celle qui pilote la régulation de la température ou un autre paramètre de fonctionnement du réservoir 1 (niveau de liquide ou de gaz de refroidissement par exemple) cf. figure 2.

Bien entendu, la commande du déplacement du couvercle 2 peut également être déportée (par voie filaire ou sans fil).

Par exemple, une interface 50 de commande peut être configurée pour recevoir un ordre extérieur transmis à l'organe 3 d'actionnement (cf. figure 1).

Dans l'exemple des figures 1 et 2 l'organe 3 d'actionnement est un vérin pneumatique.

Selon un exemple de fonctionnement possible, une commande de l'opérateur ou d'une machine via l'interface (5 et/ou 50) actionne par exemple un distributeur 14 d'énergie (dans cet exemple un débit de gaz mais pourrait être un débit de liquide ou un courant électrique).

Sous l'effet de la pression du fluide, le vérin 3 entraine le rapprochement ou l'éloignement des extrémités 6, 7. Le vérin 3 (ou équivalent) est par exemple piloté par un système à commandes électro-pneumatique permettant de commander à l'aide d'une faible puissance électrique le distributeur pneumatique à une fréquence suffisante d'utilisation (notamment de 0 à 10Hz de préférence 0,03Hz).

Le dispositif comprend un système de capteur(s) 8, 9 de mesure de la position de l'organe 3 d'actionnement. Notamment, le réservoir 1 comprend au moins un capteur 8, 9 de détection configuré pour détecter lorsque l'organe 3 d'actionnement atteint sa première position et/ou sa seconde position. Les capteurs 8, 9 de position sont par exemple des capteurs à effet hall positionnés de façon déterminée sur l'organe 3 et correspondant aux positions du couvercle 2 à détecter (ouvert/fermé).

L'extrémité 6 du bras du vérin peut être reliée au couvercle 2 par exemple via une platine (par exemple en acier inoxydable type 304L).

L'information sur l'état (position du couvercle 2) peut être envoyé à une électronique 4 de commande (suite à la détection de la position par le ou les capteurs 7, 8). L'électronique 4 de commande peut comprendre ou être reliée à l'interface 5, 50 homme-machine.

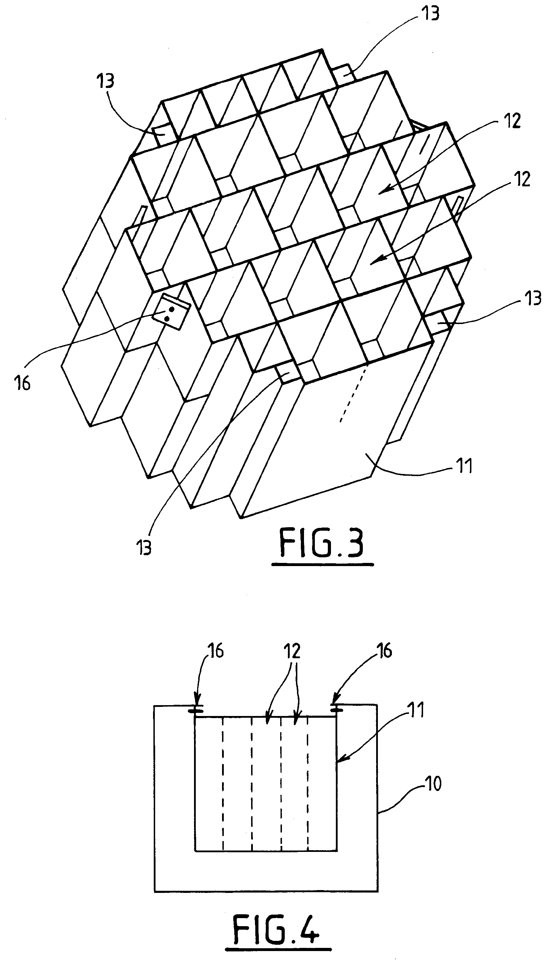

La figure 3 représente un exemple de panier 11 support pouvant être utilisé dans un tel réservoir 1 (ou dans tout type de réservoir avec ou sans organe 3 d'actionnement commandé).

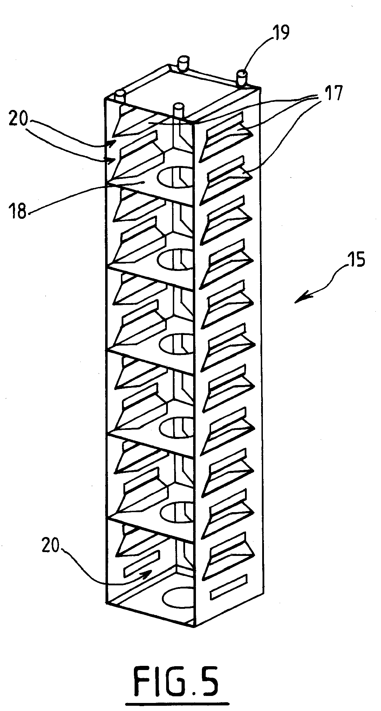

Le panier 11 est prévu pour accueillir des objets, par exemple rangés dans des racks 15 ou tour de rangement à logements 20 multiples (tel que celui illustré à la figure 5). Le panier 11 support comprend un corps rigide délimitant une pluralité de casiers 12 ou alvéoles destinés à accueillir des éléments tels que des racks 15 de stockage de produits. Les casiers 12 sont délimités par des parois latérales et éventuellement des parois de fond et sont ouverts au niveau d'une extrémité supérieure qui coïncide avec l'extrémité ouverte du volume de stockage de la cuve 10.

Le panier 11 support peut être fixé à l'intérieur de la cuve 10 via des organes 16 de fixation notamment au moins un système à vis et écrou. Par exemple, l'extrémité supérieure du panier 11 support comprend au moins un organe 16 de fixation destiné à coopérer avec un dispositif de positionnement ou de guidage des éléments destiné à être stockés dans le ou les casiers.

Le panier 11 est par exemple fixé à l'intérieur de la cuve 10 via un système de quatre vis/écrou situés de façon diamétralement opposée. Un système de plaques 13 peut permettre de fixer, sur l'extrémité supérieure du panier 11, un système pour le positionnement des racks 15. Le panier 11 peut comporter par exemple un système d'indexation ou repères permettant un positionnement et un retrait précis des racks (notamment dans le cas d'une installation automatique).

La position du panier 11 dans la cuve 10 peut être fixe et l'angle de positionnement par rapport à l'axe vertical central de la cuve 10 peut être déterminé ou modifié en fonction du mode d'accès aux échantillons dans la cuve 10.

De préférence, l'extrémité inférieure du panier 11 support est au moins partiellement close et est située au-dessus du fond du volume de stockage de la cuve 10 (cf. figure 4).

Le panier 11 permet d'entourer les racks 15 (étagères abritant les échantillons) et de répartir la température à l'intérieur de la cuve 10.

Les racks 15 peuvent contenir par exemple des boîtes contenant les échantillons biologiques en tubes/paillettes/poches.

Les racks 15 sont prévus pour faciliter la manipulation. Le panier 11 assure un guidage des racks 15 (déplacement en translation verticale). De façon avantageuse il peut ainsi y avoir une seule direction d'extraction et d'insertion des racks. De préférence, le dispositif est dépourvu d'un système supplémentaire de blocage des racks. Les racks 15 peuvent reposer sur le fond du panier 11.

Les racks 15 sont de préférence rigides et structurés pour pouvoir résister aux accélérations engendrées par un système de manipulation automatisé (vitesse de déplacement de 0 à 2 m/s de préférence 0,3m/s par exemple) tout en conservant une géométrie relativement uniforme.

Les racks 15 peuvent être réalisés à partir de tôles en acier inoxydable (notamment du type 304L) par découpe, pliage et assemblage (soudage) pour obtenir une géométrie définissant des logements 20 (douze logements par exemple). Comme visible à la figure 5, les racks 15 peuvent être équipés de plaques 18 horizontales de rigidification prévues tous les deux logements 20.

Chaque rack 15 peut être équipé de lamelle(s) 17 ressort(s) taillée(s) dans la masse des parois latérales du rack 15 et positionnée(s) autour des boîtes logées dans les logements 20. Ces lamelles repliées font saillie dans le logement 20 pour maintenir les boîtes d'échantillons dans une position stable par déformation élastique des lamelles 17. Les lamelles 17 repliées (formes élastiques) permettent donc de bloquer des boîtes dans les logements 20 délimités dans le rack 15. Des vis ou goujons 19 supérieurs peuvent être prévus à l'extrémité du rack 15 pour permettre la fixation d'un accessoire ou interface.

De préférence, le panier 11 support est constitué d'un matériau ayant une conductivité thermique comprise par exemple entre 200 W/m.K et 400 W/m.K.

Par exemple le panier 11 est constitué d'aluminium « série 1000 » (c'est-à-dire proche de l'aluminium pur) et a une conductivité thermique deux fois plus importante (200 Wxm-1xK-1) que d'autres matériaux utilisés couramment en assemblage mécanique et dans les récipients cryogéniques. Des matériaux plus conducteurs existent (comme l'or, argent ou le cuivre) mais leur surcoût ne justifie pas les gains thermiques associés.

De plus, la structure du panier 11 permet d'homogénéiser la circulation du fluide froid atout du panier. Le panier 11 permet d'assurer une température uniforme au niveau des racks 15 et donc des échantillons contenus dans les racks 15.

## Revendications

1. Réservoir de stockage de produits à des températures cryogéniques comprenant une cuve (10) isolée sous vide et délimitant un volume de stockage ayant une extrémité supérieure ouverte, le réservoir (1) comprenant un couvercle (2) mobile pour la fermeture et l'ouverture du volume de stockage, le réservoir comprenant un organe (3) d'actionnement commandé comprenant un élément moteur à entraînement hydraulique et/ou pneumatique et/ou électrique et relié mécaniquement au couvercle (2) pour déplacer le couvercle (2), l'organe (3) d'actionnement étant mobile entre une première position disposant le couvercle (2) dans sa position de fermeture du volume de stockage de la cuve (10) et une seconde position disposant le couvercle dans une position d'ouverture du volume de stockage de la cuve (10), **caractérisé en ce qu'**il comporte un système de capteur(s) (8, 9) de mesure de la position de l'organe (3) d'actionnement et notamment au moins un capteur (8, 9) de détection configuré pour détecter lorsque l'organe (3) d'actionnement atteint sa première position et/ou sa seconde position, et **en ce qu'**il comprend un panier (11) support disposé dans le volume de stockage de la cuve (10), le panier (11) support comprenant un corps rigide délimitant une pluralité de casiers (12) destinés à accueillir des éléments tels que des racks de stockage de produits, les casiers (12) étant délimités par des parois latérales et étant ouverts au niveau d'une extrémité supérieure qui coïncide avec l'extrémité ouverte du volume de stockage de la cuve (10).

2. Réservoir selon la revendication 1, **caractérisé en ce que** l'organe (3) d'actionnement comprend une première extrémité reliée à la cuve (10) et une seconde extrémité reliée au couvercle (2).

3. Réservoir selon l'une quelconque des revendications 1 à 2, **caractérisé en ce que** l'organe (3) d'actionnement comprend au moins l'un parmi : un mécanisme télescopique, un mécanisme à engrenage, un vérin.

4. Réservoir selon l'une quelconque des revendications 1 à 3, **caractérisé en ce que** le panier (11) support est fixé à l'intérieur de la cuve (10) via des organes (16) de fixation notamment au moins un système à vis et écrou.

5. Réservoir selon l'une quelconque des revendications 1 à 4, **caractérisé en ce que** l'extrémité supérieure du panier (11) support comprend au moins un organe (13) de fixation destiné à coopérer avec un dispositif de positionnement ou de guidage des éléments destiné à être stockés dans le ou les casiers.

6. Réservoir selon l'une quelconque des revendications 1 à 5, **caractérisé en ce que** l'extrémité inférieure du panier (11) support est au moins partiellement close et est située au-dessus du fond du volume de stockage de la cuve (10).

7. Réservoir selon l'une quelconque des revendications 1 à 6, caractérisé en ce le panier (11) support est constitué d'un matériau ayant une conductivité thermique comprise entre 200 W/m.K et 400 W/m.K.

8. Réservoir selon l'une quelconque des revendications 1 à 7, caractérisé en ce le panier (11) support est constitué d'aluminium.

## Patentansprüche

1. Lagerbehälter für Produkte bei kryogenen Temperaturen, umfassend einen isolierten Tank (10) unter Vakuum, und ein Lagervolumen begrenzend, das einem offenes oberes aufweist, wobei der Behälter (1) einen beweglichen Deckel (2) umfasst, um das Lagervolumen zu schließen und zu öffnen, wobei der Behälter ein Organ (3) zur gesteuerten Betätigung umfasst, ein Motorelement mit hydraulischem und/oder pneumatischem und/oder elektrischem Antrieb umfassend, und mechanisch mit dem Deckel (2) verbunden, um den Deckel (2) zu verschieben, wobei das Organ (3) zur Betätigung zwischen einer ersten Position, die den Deckel (2) in seiner Verschlussposition des Lagervolumens des Tanks (10) anordnet, und einer zweiten Position beweglich ist, die den Deckel in einer Öffnungsposition des Lagervolumens des Tanks (10) anordnet, **dadurch gekennzeichnet, dass** er ein System mit Sensor(en) (8, 9) zur Messung der Position des Organs (3) zur Betätigung beinhaltet, und insbesondere mindestens einen Sensor (8, 9) zum Detektieren, konfiguriert, um zu detektieren, wenn das Organ (3) zur Betätigung seine erste Position und/oder seine zweite Position erreicht, und dadurch, dass es einen Stützkorb (11) umfasst, der Im Lagervolumen des Tanks (10) angeordnet ist, wobei der Stützkorb (11) einen starren Körper umfasst, der eine Vielzahl von Fächern (12) begrenzt, die dazu bestimmt sind, um Elemente wie z. B. Regale zur Lagerung von Produkten aufzunehmen, wobei die Fächer (12) von seitlichen Wänden begrenzt sind und im Bereich eines oberen Endes, das mit dem offenen Ende des Lagervolumens des Tanks (10) übereinstimmt, offen sind.

2. Behälter nach Anspruch 1, **dadurch gekennzeichnet, dass** das Organ (3) zur Betätigung ein erstes Ende umfasst, das mit dem Tank (10) verbunden ist, und ein zweites Ende, das mit dem Deckel (2) verbunden ist.

3. Behälter nach einem der Ansprüche 1 bis 2, **dadurch gekennzeichnet, dass** das Organ (3) zur Betätigung mindestens eines umfasst von: einem teleskopischen Mechanismus, einem Eingriffsmechanismus, einem Zylinder.

4. Behälter nach einem der Ansprüche 1 bis 3, **dadurch gekennzeichnet, dass** der Stützkorb (11) im Inneren des Tanks (10) mit Hilfe von Fixierungsorganen (16), insbesondere mindestens einem Schrauben- und Schraubenmuttersystem, fixiert ist.

5. Behälter nach einem der Ansprüche 1 bis 4, **dadurch gekennzeichnet, dass** das obere Ende des Stützkorbs (11) mindestens ein Fixierungsorgan (13) umfasst, das dazu bestimmt ist, um mit einer Vorrichtung zur Positionierung oder Führung der Elemente zusammenzuwirken, die dazu bestimmt ist, um in dem Fach oder den Fächern gelagert zu werden.

6. Behälter nach einem der Ansprüche 1 bis 5, **dadurch gekennzeichnet, dass** das untere Ende des Stützkorbs (11) mindestens teilweise geschlossen ist und sich über dem Boden des Lagervolumens des Tanks (10) befindet.

7. Behälter nach einem der Ansprüche 1 bis 6, **dadurch gekennzeichnet, dass** der Stützkorb (11) aus einem Material besteht, das eine Wärmeleitfähigkeit aufweist, die zwischen 200 W/m.K und 400 W/m.K enthalten ist.

8. Behälter nach einem der Ansprüche 1 bis 7, **dadurch gekennzeichnet, dass** der Stützkorb (11) aus Aluminium besteht.

## Claims

1. Tank for storing products at cryogenic temperatures comprising an insulated container (10) under vacuum and delimiting a storage volume having an open upper end, the tank (1) comprising a mobile cover (2) for the closing and opening of the storage volume, the tank comprising a controlled actuation member (3) comprising a motor element with hydraulic and/or pneumatic and/or electrical drive and mechanically connected to the cover (2) to move the cover (2), the actuation member (3) being mobile between a first position arranging the cover (2) in the closing position thereof of the storage volume of the container (10) and a second position arranging the cover in an opening position of the storage volume of the container (10), **characterised in that** it comprises a system of sensor(s) (8, 9) to measure the position of the actuation member (3) and in particular, at least one detection sensor (8, 9) configured to detect when the actuation member (3) reaches the first position thereof and/or the second position thereof, and **in that** it comprises a support basket (11) arranged in the storage volume of the container (10), the support basket (11) comprising a rigid body delimiting a plurality of compartments (12) intended to house elements such as product storage racks, the compartments (12) being delimited by side walls and being open at the level of an upper end which coincides with the open end of the storage volume of the container (10).

2. Tank according to claim 1, **characterised in that** the actuation member (3) comprises a first end connected to the container (10) and a second end connected to the cover (2).

3. Tank according to any one of claims 1 to 2, **characterised in that** the actuation member (3) comprises at least one from among: a telescopic mechanism, a gearing mechanism, an actuator.

4. Tank according to any one of claims 1 to 3, **characterised in that** the support basket (11) is secured to the inside of the container (10) via securing members (16), in particular, at least one nut and bolt system.

5. Tank according to any one of claims 1 to 4, **characterised in that** the upper end of the support basket (11) comprises at least one securing member (13) intended to cooperate with a device for positioning or guiding the elements intended to be stored in the compartment(s).

6. Tank according to any one of claims 1 to 5, **characterised in that** the lower end of the support basket (11) is at least partially closed and is located above the bottom of the storage volume of the container (10).

7. Tank according to any one of claims 1 to 6, **characterised in that** the support basket (11) is made of a material having a thermal conductivity of between 200 W/m.K and 400 W/m.K.

8. Tank according to any one of claims 1 to 7, **characterised in that** the support basket (11) is made of aluminium.
